# EUROPÄISCHE PATENTSCHRIFT

(11) **EP 1 145 639 B1**
(45) Veröffentlichungstag und Bekanntmachung des Hinweises auf die Patenterteilung: **06.07.2005**
(21) Anmeldenummer: 01108558.6
(22) Anmeldetag: 05.04.2001
(51) Int. Cl.: A22C 7/00

(54) **"Automatische Tunnelverschnürmaschine zur Weiterverarbeitung von Fleischstücken zu Rollbraten"**
Automatic tie up machine for further processing of pieces of meat for roll roast
Machine de ficelage automatique pour le traitement ultérieur des morceaux de viande à rôtir

(30) Priorität: 10.04.2000 DE 10017522
(43) Veröffentlichungstag der Anmeldung: 17.10.2001
(73) Patentinhaber: HERMANN WIEGAND GMBH, 36169 Rasdorf (DE)
(72) Erfinder: Wiegang, Karlheinz, 36169 Rasdorf (DE)
(74) Vertreter: Lelgemann, Karl-Heinz, Dipl.-Ing.

(56) Entgegenhaltungen:
- EP-A- 0 621 178
- DE-C- 102 228
- GB-A- 337 141
- US-A- 4 610 844
- US-A- 5 702 295

## Beschreibung

Die Erfindung bezieht sich auf eine automatische Tunnelverschnürmaschine nach dem Oberbegriff des Patentanspruchs 1 und 2 sowie auf ein Verfahren nach dem Oberbegriff des Patentanspruchs 6.

Bei derartigen automatischen Tunnelverschnürmaschinen zur Weiterverarbeitung von Fleischstücken zu Rollbraten hat es sich als problematisch herausgestellt, daß insbesondere bei kleinen, dünnen und vergleichsweise leichten Fleischstücken das Phänomen auftritt, daß zwischen der die Fleischstücke der automatischen Tunnelverschnürmaschine zufördernden Fördervorrichtung und den Fleischstücken Gleitreibung auftritt, mit der Folge, daß sich die Fleischstücke nicht bzw. nicht mit derselben Laufgeschwindigkeit vorwärts bewegen wie die Fördervorrichtung. Hierzu kommt es an der Wickelstation zu beträchtlichen Unregelmäßigkeiten, da der Abstand der Wicklungen des Rollbratens in unerwünschter Weise variiert, wobei darüber hinaus auch Stillstände der automatischen Tunnelverschnürmaschine nicht auszuschließen sind. In jedem Fall weist die Umschnürung des in der automatischen Tunnelverschnürmaschine erstellten bzw. umwickelten Rollbratens unerwünschte Unregelmäßigkeiten auf, die die Qualität des erstellten Fleischprodukts erheblich beeinträchtigen.

Aus der EP-A-0 621 178 ist eine Tunnelverschnürmaschine bekannt, die eine Wickelstation, eine Greifeinrichtung und eine Fördervorrichtung aufweist, die die Fleischstücke der Greifeinrichtung und der Wickelstation zuführt. Die im Falle der Tunnelverschnürmaschine gemäß EP-A-0 621 178 vorgesehene Fördervorrichtung besteht aus einem waagerecht angeordneten Förderer und zwei an dessen Seitenrändern angeordneten Hilfsförderern. Die beiden seitlich des Hauptförderers angeordneten Hilfsförderer stehen senkrecht zum Hauptförderer und begrenzen diesen seitlich. Die drei genannten Förderer bilden quasi einen rechteckigen Förderquerschnitt mit einer vergleichsweise breiten, durch den Hauptförderer gebildeten Grundseite.

Sofern Fleischstücke der Greif- bzw. der Wickelstation zugeführt werden sollen, die im Vergleich zu der Breite des Hauptförderers bzw. zu dem Abstand der beiden Seitenförderer nur eine relativ geringe Breite aufweisen, können Unregelmäßigkeiten beim Transport dieser Fleischstücke nicht sicher ausgeschlossen werden.

Die US-A-5 702 295 zeigt eine Fördervorrichtung, die zu einer Positioniervorrichtung für Fischstücke mit einer bestimmten Größe gehört. Diese bekannte Fördervorrichtung kann zwei seitliche Förderer aufweisen, die sich mit einem Winkel zur Vertikalen schräg aufwärts erstrecken, so dass sie einen Förderquerschnitt bilden, der sich nach oben gleichmäßig erweitert.

Der Erfindung liegt die Aufgabe zugrunde, die eingangs geschilderte automatische Tunnelverschnürmaschine bzw. das eingangs angegebene Verfahren derart weiterzubilden, dass in jedem Fall, d.h. auch bei vergleichsweise kleinen und schmalen Fleischstücken, ein geregelter und genau gesteuerter Verschnürvorgang in der automatischen Tunnelverschnürmaschine bzw. an deren Wickelstation gesichert ist.

Diese Aufgabe wird erfindungsgemäß durch die Merkmale im kennzeichnenden Teil des Patentanspruchs 1, 2 bzw. 6 gelöst, dass die Fördervorrichtung der Tunnelverschnürmaschine einen mulden- bzw. V-förmigen Förderquerschnitt aufweist, mittels dem die Haftreibungskräfte zwischen den auf der Fördervorrichtung befindlichen Fleischstücken und der Fördervorrichtung vergrößerbar sind und der mittels zweier schräg angeordneter Förderbänder ausgebildet ist. Durch die zueinander schräg gestellte Anordnung der beiden, die Fördervorrichtung bildenden Förderbänder wird sichergestellt, dass die Breite des Förderquerschnitts der Fördervorrichtung allmählich bzw. gleichmäßig reduziert wird, bis sie an der tiefsten Stelle quasi gleich Null wird. Auch kleinste Fleischstück werden daher mittels der anmeldungsgemäß ausgestalteten Fördervorrichtung zuverlässig und gleichmäßig an die weiteren Stationen der Tunnelverschnürmaschine weitergefördert.

Gemäß der Ausführungsform nach Patentanspruch 1 wird eine allmähliche Verbringung der Fleischstücke in eine Form erreicht, bei der ihre Querschnittsform bereits vor dem Umgreifen durch die Greifeinrichtung vergleichsweise wickelfreundlich ist.

Gemäß der Ausführungsform nach Patentanspruch 2 wird ein exakter Ausgleich des Vertikalniveaus der Fördervorrichtung bei unebenem Untergrund in einfacher Weise durchführbar. Im Vergleich zur bisher üblichen räumlichen bzw. seitlichen Versetzung von Rädern an einem eine Schrägfläche aufweisenden Fußteil ergibt sich durch die vorstehend geschilderte erfindungsgemäße Lösung eine erhebliche Zeiteinsparung.

Vorteilhaft sind die beiden Förderbänder der Fördereinrichtung etwa rechtwinklig zueinander angeordnet.

Durch die Ausgestaltung der Greifeinrichtung der erfindungsgemäßen automatischen Tunnelverschnürmaschine gemäß Patentanspruch 4 kann im Zusammenwirken mit dem V-förmigen Förderquerschnitt der Fördervorrichtung eine optimale Formgebung für den Querschnitt der Fleischstücke erreicht werden.

Gemäß der Ausgestaltung nach Patentanspruch 5 wird die optimale Formgebung hinsichtlich des Querschnitts der Fleischstücke bis unmittelbar vor dem Wickelvorgang aufrechterhalten, wobei ein Zurückfahren der Greifeinrichtung ohne weiteres während des Wickelvorgangs möglich ist.

Bei dem erfindungsgemäßen Verfahren gemäß Patentanspruch 5 werden Störungen des Wickelvorgangs sicher vermieden. Die Fleischstücke erhalten einen besonders wickelgünstigen Querschnitt.

Die besonders wickelgünstige Querschnittsform der Fleischstücke wird bis unmittelbar vor den Wickelvorgang zwangsweise aufrecht erhalten.

Im folgenden wird die Erfindung an Hand einer Ausführungsform unter Bezugnahme auf die Zeichnung näher erläutert.

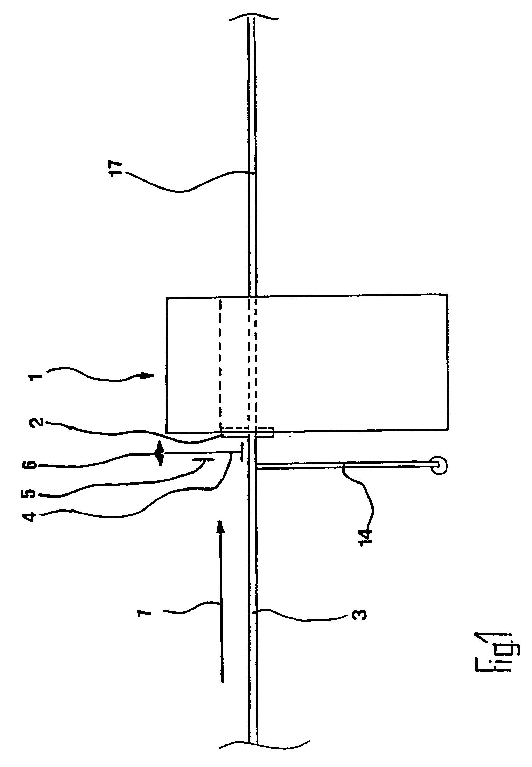

Es zeigen:
- Figur 1: eine Prinzipdarstellung einer erfindungsgemäßen automatischen Tunnelverschnürmaschine zur Weiterverarbeitung von Fleischstücken zu Rollbraten;
- Figur 2: einen Querschnitt durch eine Fördervorrichtung der in Figur 1 dargestellten automatischen Tunnelverschnürmaschine zur Weiterverarbeitung von Fleischstücken zu Rollbraten; und
- Figur 3: eine Seitenansicht der in Figur 2 im Schnitt dargestellten Fördervorrichtung der erfindungsgemäßen automatischen Tunnelverschnürmaschine zur Weiterverarbeitung von Fleischstücken zu Rollbraten.
Eine in Figur 1 im Prinzip dargestellte automatische Tunnelverschnürmaschine 1 dient zur Weiterverarbeitung von in den Figuren nicht dargestellten Fleischstücken zu Rollbraten. Mittels derartiger automatischer Tunnelverschnürmaschinen 1 wird das mühsame Umwickeln von Fleischstücken mit Bratenschnüren von Hand ersetzt.

Die erfindungsgemäße automatische Tunnelverschnürmaschine 1 hat eine Wickelstation 2, an der die Umschnürung der Fleischstücke vollautomatisch durchgeführt wird.

Hierzu wird ein Fleischstück der Tunnelverschnürmaschine 1 bzw. deren Wickelstation 2 mittels einer Fördervorrichtung 3 zugeführt. Unmittelbar bevor das auf der Fördervorrichtung 3 befindliche Fleischstück die Wickelstation 2 der automatischen Tunnelverschnürmaschine 1 erreicht, wird das in den Figuren nicht dargestellte Fleischstück mittels einer in Figur 1 lediglich prinzipiell dargestellten Greifeinrichtung 4 erfaßt.

Die Greifeinrichtung 4 ist als Einzelgreifer 4 ausgebildet. Der Einzelgreifer 4 ist, wie in Figur 1 durch einen Doppelpfeil 5 dargestellt, in bezug auf die Fördervorrichtung 3 auf- und abwärts bewegbar. Darüber hinaus ist der Einzelgreifer 4, wie durch den Doppelpfeil 6 dargestellt, in Laufrichtung 7 der Fördervorrichtung 3 mit derselben und einem auf der Fördervorrichtung 3 befindlichen Fleischstück bis zur Wickelstation 2 und von dort wieder zurück hin- und herbewegbar.

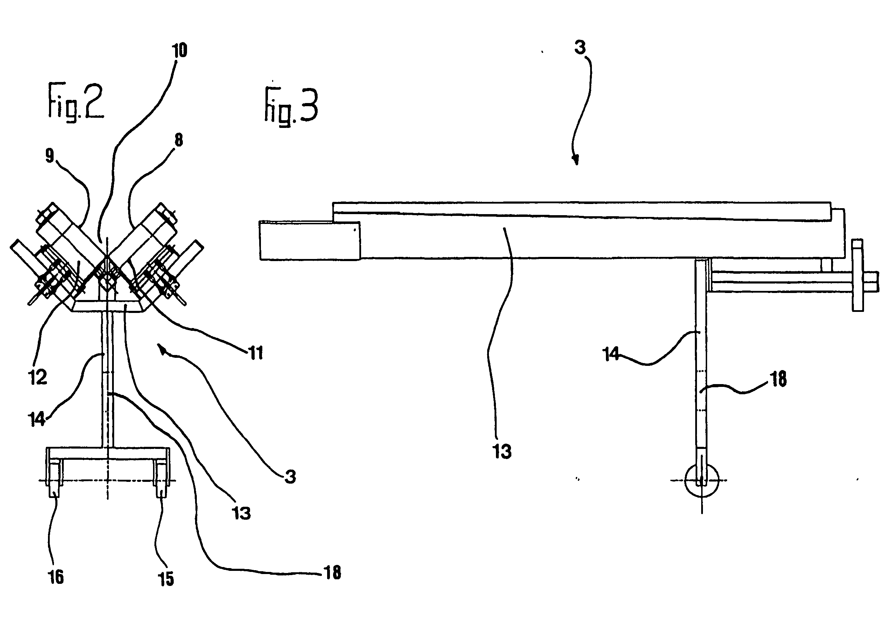

Die an Hand der Figuren 2 und 3 näher gezeigte Fördervorrichtung 3 wird durch zwei Förderbänder 8, 9 gebildet, die, wie insbesondere aus Figur 2 hervorgeht, einen V-förmigen Förderquerschnitt 10 der Fördervorrichtung 3 bilden.

Die beiden Förderbänder 8, 9 der Fördervorrichtung 3 laufen auf zueinander schrägstehenden Rollen 11, 12, die ihrerseits in geeigneter Weise an einem Gerüst 13 gehaltert sind.

Die Rollen sind, wie insbesondere aus Figur 2 hervorgeht, in einem etwa rechten Winkel zueinander angeordnet.

Das Gerüst 13 ruht auf zumindest einem Stützfuß 14, der seinerseits an seiner Unterseite Räder 15, 16 aufweist, auf denen die gesamte Fördervorrichtung 3 verfahrbar ist.

Auch eine in Figur 1 lediglich prinzipiell dargestellte, der automatischen Tunnelverschnürmaschine 1 nachgeordnete Fördervorrichtung 17 kann mit einem oder mehreren Stützfüßen 14 versehen sein.

Der Stützfuß 14 hat eine Luftdruckfedereinrichtung 18, mittels der das Vertikalniveau der Förderbänder 8, 9 der Fördervorrichtung 3 an Schwankungen des Boden- bzw. des Tunnelverschnürmaschinenniveaus ohne weiteres anpassbar ist.

Es ist möglich, die Fördervorrichtung 3 so zu gestalten, daß die Schrägstellung der Rollen 11, 12 mit abnehmendem Abstand zur Wickelstation 2 der automatischen Tunnelverschnürmaschine 1 zunimmt, so daß der durch die beiden Rollen 11, 12 eingeschlossene Winkel am Grunde des V-förmigen Förderquerschnitts 10 der Fördervorrichtung 3 mit abnehmendem Abstand zur automatischen Tunnelverschnürmaschine 1 kleiner bzw. spitzer wird.

Vor einer Inbetriebnahme der erfindungsgemäßen automatischen Tunnelverschnürmaschine 1 werden zunächst die eingangsseitige Fördervorrichtung 3 sowie eine in Laufrichtung der Fördervorrichtung 3 stromab der Tunnelverschnürmaschine angeordnete weitere Fördervorrichtung 17 mittels der Luftdruckfedereinrichtungen ihrer Stützfüße 14 so ausgerichtet, daß sich ein stufenfreier Förderpfad für in der automatischen Tunnelverschnürmaschine 1 zu verarbeitende Fleischstücke ergibt. Dies geschieht durch entsprechende Beaufschlagung der in den Stützfüßen 14 vorgesehenen Luftdruckfedereinrichtungen 18.

Die in der automatischen Tunnelverschnürmaschine 1 zu verarbeitenden, in den Figuren nicht dargestellten Fleischstücke werden auf der Fördervorrichtung 3 dem Einzelgreifer 4 bzw. der Wickelstation 2 der automatischen Tunnelverschnürmaschine 1 zugeführt. Während dieses Fördervorgangs werden die Fleischstücke aufgrund des V-förmigen Förderquerschnitts 10 mit vergleichsweise großen Haftreibungskräften beaufschlagt. Darüber hinaus erfahren die Fleischstücke bereits bei ihrer Zuförderung zur automatischen Tunnelverschnürmaschine 1 auf der Fördervorrichtung 3 eine Formgebung, in der ihre Querschnittsform vergleichsweise wickelgünstig vorgeformt wird.

Auch vergleichsweise kurze Fleischstücke oder ein vergleichsweise niedriges Gewicht aufweisende Fleischstücke werden durch die Fördervorrichtung 3 bzw. deren zueinander schräggestellte Förderbänder 8, 9 zuverlässig weitergefördert. Irgendwelche Rutschungen werden weitestgehend bzw. vollständig vermieden.

Wenn das betreffende Fleischstück den in Vertikalrichtung auf- und abwärts bewegbaren Einzelgreifer 4 erreicht, drückt der Einzelgreifer 4 den unter ihm befindlichen Abschnitt des Fleischstücks in den V-förmigen Förderquerschnitt 10 der Fördervorrichtung 3. Daraufhin bewegt sich der betreffende Abschnitt des Fleischstücks auf der Fördervorrichtung 3 mit dem in seiner Greifstellung befindlichen Einzelgreifer bis zur Wickelstation 2, wo der Verschnür- bzw. Wickelvorgang durchgeführt wird. Beim Erreichen der eigentlichen Wickelstation 2 löst der Einzelgreifer 4 seinen Eingriff und fährt, wie durch den Doppelpfeil 6 in Figur 1 gezeigt, gegen die Laufrichtung 7 der Fördervorrichtung 3 in diejenige Position zurück, in der er durch vertikale Abwärtsbewegung den nächsten Abschnitt des Fleischstücks greift und in die Fördervorrichtung 3 bzw. deren V-förmigen Förderquerschnitt 10 drückt.

## Patentansprüche

1. Automatische Tunnelverschnürmaschine (1) zur Weiterverarbeitung von Fleischstücken zu Rollbraten, mit einer Wickelstation (2), an der Fleischstücke mittels Bratenschnüren umwickelbar sind, einer Greifeinrichtung (4), mittels der die Fleischstücke umgreif- und in eine den Wickelvorgang an der Wickelstation (2) fördernde Querschnittsform bringbar sind, und einer Fördervorrichtung (3), mittels der die Fleischstücke der Greifeinrichtung (4) und der Wickelstation (2) zuführbar sind, **dadurch gekennzeichnet, dass** die Fördervorrichtung (3) einen aus zwei schräg angeordneten Förderbändern (8, 9) ausgebildeten V-förmigen Förderquerschnitt (10) aufweist, mittels dem die Haftreibungskräfte zwischen den auf der Fördervorrichtung (3) befindlichen Fleischstücken und der Fördervorrichtung (3) vergrößerbar sind, wobei die Schrägstellung der Förderbänder (8, 9) mit abnehmendem Abstand von der Wickelstation (2) der Tunnelverschnürmaschine (1) zunimmt.

2. Automatische Tunnelverschnürmaschine zur Weiterverarbeitung von Fleischstücken zu Rollbraten, mit einer Wickelstation (2), an der Fleischstücke mittels Bratenschnüren umwickelbar sind, einer Greifeinrichtung (4), mittels der die Fleischstücke umgreif- und in eine den Wickelvorgang an der Wickelstation (2) fördernde Querschnittsform bringbar sind, und einer Fördervorrichtung (3), mittels der die Fleischstücke der Greifeinrichtung (4) und der Wickelstation (2) zuführbar sind, **dadurch gekennzeichnet, dass** die Fördervorrichtung (3) durch zumindest einen Stützfuß (14) auf einem Untergrund verfahrbar ist, der mittels einer Luftdruckfedereinrichtung (18) höhenverstellbar ausgebildet ist, und dass die Fördervorrichtung (3) einen muldenförmigen bzw. V-förmigen Förderquerschnitt aufweist, mittels dem die Haftreibungskräfte zwischen den auf der Fördervorrichtung (3) befindlichen Fleischstücken und der Fördervorrichtung vergrößerbar sind.

3. Automatische Tunnelverschnürmaschine nach Anspruch 1 oder 2, bei der die beiden Förderbänder (8, 9) der Fördervorrichtung (3) etwa rechtwinklig zueinander angeordnet sind.

4. Automatische Tunnelverschnürmaschine nach einem der Ansprüche 1 bis 3, bei der die Greifeinrichtung (4) als in Vertikalrichtung zur Fördervorrichtung (3) hin- und von dieser wegbewegbarer Einzelgreifer (4) ausgebildet ist.

5. Automatische Tunnelverschnürmaschine nach einem der Ansprüche 1 bis 4, bei der die Greifeinrichtung (4) in Laufrichtung (7) der Fördervorrichtung (3) hin- und her- bewegbar im Bereich unmittelbar vor der Wickelstation (2) angeordnet ist.

6. Verfahren zur Weiterverarbeitung von Fleischstücken zu Rollbraten, bei dem die Fleischstücke einer Tunnelverschnürmaschine zugefördert, an der Tunnelverschnürmaschine gegriffen, in eine wickelgünstige Querschnittsform gebracht und umwickelt werden, **dadurch gekennzeichnet, daß** die bei der Zuförderung der Fleischstücke zur Tunnelverschnürmaschine auf die Fleischstücke ausgeübte Haftreibung durch eine mulden- bzw. V-förmige Ausgestaltung einer Fördervorrichtung (3) erhöht wird, wobei durch die mulden- bzw. V-förmige Ausgestaltung der Fördervorrichtung (3) die Querschnittsform der Fleischstücke bereits vor der Greifung in Richtung auf eine wickelgünstigere Querschnittsform verändert wird, wobei die Fleischstücke bei ihrer Verbringung in eine wickelgünstigere Querschnittsform von oben gegriffen und in die Fördervorrichtung (3) gedrückt werden, und wobei sich ein Einzelgreifer (4) in Laufrichtung der Fördervorrichtung (3) in Greifstel - lung mit dieser und dem auf bzw. in ihr befindlichen Fleischstück mit- bzw. zu einer Wickelstation (2) und danach außer Eingriff mit dem Fleischstück gegen die Laufrichtung (7) der Fördervorrichtung (3) zurückbewegt.

## Claims

1. An automatic tunnel-type tying machine (1) for processing cuts of meat into rolled meat, said machine having a rolling station (2) in which the cuts of meat can be tied with a string, a gripper means (4) for forming a grip around the cuts of meat and for causing them to take a cross-sectional shape promoting the rolling process at the rolling station (2) and a conveyor system (3) for feeding the cuts of meat to the gripper means (4) and to the rolling station (2), **characterized in that** the conveyor system (3) comprises a V-shaped conveyor cross-section (10) formed from two obliquely arranged conveyor belts (8, 9), said conveyor cross-section permitting to increase the stiction forces between the cuts of meat placed on the conveyor system (3) and the conveyor system (3), with the incline of the conveyor belts (8, 9) increasing with decreasing distance to the rolling station (2) of the tunnel-type tying machine (1).

2. An automatic tunnel-type tying machine for processing cuts of meat into rolled meat, said machine having a rolling station (2) in which the cuts of meat can be tied with a string, a gripper means (4) for forming a grip around the cuts of meat and for causing them to take a cross-sectional shape promoting the rolling process at the rolling station (2) and a conveyor system (3) for feeding the cuts of meat to the gripper means (4) and to the rolling station (2), **characterized in that** the conveyor system (3) can be caused to travel on a ground by at least one support foot (14) that is configured such that its height is adjustable by means of a pneumatic spring system (18) and that the conveyor system (3) comprises a bucket-shaped or V-shaped conveyor cross-section that permits to increase the stiction forces between the cuts of meat placed on the conveyor system (3) and the conveyor system.

3. The automatic tunnel-type tying machine as set forth in claim 1 or 2, wherein the two conveyor belts (8, 9) of the conveyor system (3) are disposed approximately at right angles to one another.

4. The automatic tunnel-type tying machine as set forth in any of the claims 1 through 3, wherein the gripper means (4) is configured to be a single gripper (4) adapted to be moved in the vertical direction toward the conveyer system (3) and away therefrom.

5. The automatic tunnel-type tying machine as set forth in any of the claims 1 through 4, wherein the gripper means (4) is disposed in the region located directly in front of the rolling station (2) so as to be capable of reciprocating in the moving direction (7) of the conveyor system (3).

6. A method of processing cuts of meat into rolled meat, wherein the cuts of meat are supplied to a tunnel-type tying machine at which tunnel-type tying machine said cuts of meat are gripped, caused to take a cross-sectional shape convenient for rolling and tied, **characterized in that** the stiction exerted onto the cuts of meat as they are being supplied to the tunnel-type tying machine is increased by configuring a conveyor system (3) in the shape of a bucket or a V-shape, with the bucket-shaped or V-shaped configuration of the conveyor system (3) causing the cross-sectional shape of the cuts of meat to change and to take a cross-sectional shape more convenient for rolling already before they are gripped, with the cuts of meat being gripped from the top as they are caused to take a cross-sectional shape more convenient for rolling and being pressed into the conveyor system (3), a single gripper (4) being caused to move with or to a rolling station (2) in the moving direction of the conveyor system (3) in a position in which it forms a grip on said conveyor system and on the cut of meat placed thereon or therein and being thereafter caused to move back in a direction counter to the moving direction (7) of the conveyor means (3) so as to be removed from engagement with said cut of meat.

## Revendications

1. Machine (1) à ficeler automatique du type tunnel destinée à rouler des pièces de viande pour en faire des rôtis roulés, avec un poste de roulage (2) dans lequel les pièces de viande sont destinées à être ficelées avec de la ficelle de cuisine, un organe de préhension (4) permettant d'enserrer les pièces de viande et de leur donner, en section transversale, une forme destinée à faciliter le roulage au poste de roulage (2), et un dispositif de convoyage (3) permettant d'acheminer les pièces de viande vers l'organe de préhension (4) et le poste de roulage (2), **caractérisé en ce que** le dispositif de convoyage (3) comporte une section de convoyage (10) conformée en forme de V à partir de deux bandes transporteuses (8, 9) inclinées l'une par rapport à l'autre, ladite section de convoyage permettant d'augmenter les forces de frottement statique entre les pièces de viande se trouvant sur le dispositif de convoyage (3) et le dispositif de convoyage (3), l'inclinaison des bandes transporteuses (8, 9) augmentant en rapprochement du poste de roulage (2) de la machine à ficeler du type tunnel (1).

2. Machine à ficeler automatique du type tunnel destinée à rouler des pièces de viande pour en faire des rôtis roulés, avec un poste de roulage (2) dans lequel les pièces de viande sont destinées à être ficelées avec de la ficelle de cuisine, un organe de préhension (4) permettant d'enserrer les pièces de viande et de leur donner, en section transversale, une forme destinée à faciliter le roulage au poste de roulage (2), et un dispositif de convoyage (3) permettant d'acheminer les pièces de viande vers l'organe de préhension (4) et le poste de roulage (2), **caractérisé en ce que** le dispositif de convoyage (3) est déplaçable sur une surface de base par au moins un pied support (14) conformé pour être réglable en hauteur au moyen d'un système de ressorts pneumatiques (18) et que le dispositif de convoyage (3) comporte une section de convoyage en forme d'auge ou de V permettant d'augmenter les forces de frottement statique entre les pièces de viande se trouvant sur le dispositif de convoyage (3) et le dispositif de convoyage.

3. Machine à ficeler automatique du type tunnel selon la revendication 1 ou 2, où les deux bandes transporteuses (8, 9) du dispositif de convoyage (3) sont disposées environ perpendiculairement l'une par rapport à l'autre.

4. Machine à ficeler automatique du type tunnel selon l'une quelconque des revendications 1 à 3, où l'organe de préhension (4) est conformé en forme d'élément préhenseur individuel (4) apte à effectuer un mouvement vertical en rapprochement et en éloignement du dispositif de convoyage (3).

5. Machine à ficeler automatique du type tunnel selon l'une quelconque des revendications 1 à 4, où l'organe de préhension (4) est disposé dans la zone située directement en amont du poste de roulage (2) et est apte à effectuer un mouvement de va-et-vient dans le sens d'entraînement (7) du dispositif de convoyage (3).

6. Procédé pour rouler des pièces de viande pour en faire des rôtis roulés, où les pièces de viande sont acheminées vers une machine à ficeler du type tunnel, sont saisies à la hauteur de la machine à ficeler du type tunnel, sont mises en forme pour prendre en section transversale une forme destinée à faciliter le roulage et sont ficelées, **caractérisé en ce que** le frottement statique exercé sur les pièces de viande lors de leur acheminement vers la machine à ficeler du type tunnel est augmentée par la forme en auge ou en V donnée au dispositif de convoyage (3), la forme en auge ou en V du dispositif de convoyage (3) modifiant la forme de la section transversale des pièces de viandes avant même leur saisie, celles-ci prenant, en section transversale, une forme destinée à faciliter le roulage, les pièces de viande étant saisies par le haut alors qu'elles sont mises en forme pour leur donner, en section transversale, une forme destinée à faciliter le roulage et étant enfoncées dans le dispositif de convoyage (3), et un élément préhenseur individuel (4) se déplaçant avec ou vers un poste de roulage (2) dans le sens d'entraînement du dispositif de convoyage (3) tout en étant en prise avec ce dernier et avec la pièce de viande placée sur ou dans celui-ci et se déplaçant ensuite sur un trajet de retour dans le sens opposé au sens d'entraînement (7) du dispositif de convoyage (3), trajet sur lequel il n'est plus en prise avec la pièce de viande.
